# EUROPÄISCHE PATENTSCHRIFT

(11) **EP 3 372 372 B1**
(45) Veröffentlichungstag und Bekanntmachung des Hinweises auf die Patenterteilung: **11.09.2019**
(21) Anmeldenummer: 17160186.7
(22) Anmeldetag: 09.03.2017
(51) Int. Cl.: B29C 41/00, B29C 41/08, B29C 41/22, B29C 41/36, B29C 41/18

(54) **VERFAHREN ZUR HERSTELLUNG EINES BEHÄLTERSYSTEMS UND EINES FLÜSSIGKEITSSPENDERS SOWIE HIERMIT HERGESTELLTES BEHÄLTERSYSTEM UND HIERMIT HERGESTELLTER FLÜSSIGKEITSSPENDER**
METHOD FOR PRODUCING A CONTAINER SYSTEM AND A LIQUID DISPENSER AND CONTAINER SYSTEM WITH SAME AND RESULTING LIQUID DISPENSER
PROCÉDÉ DE FABRICATION D'UN SYSTÈME DE RÉCIPIENT ET D'UN DISTRIBUTEUR DE LIQUIDE ET SYSTÈME DE RÉCIPIENT AINSI FABRIQUÉ ET DISTRIBUTEUR DE LIQUIDE AINSI FABRIQUÉ

(43) Veröffentlichungstag der Anmeldung: 12.09.2018
(73) Patentinhaber: Aptar Radolfzell GmbH, 78315 Radolfzell (DE)
(72) Erfinder: Baumann, Tobias, 78465 Konstanz (DE); Duquet, Frédéric, 78121 Crespières (FR); Maibach, Ulrich, 78315 Radolfzell (DE)
(74) Vertreter: Patentanwaltskanzlei Cartagena

(56) Entgegenhaltungen:
- EP-A1- 0 893 356
- WO-A1-82/01176
- JP-A- 2001 315 746
- JP-A- 2002 293 317

## Beschreibung

Bekannt sind Flüssigkeitsspender zur Abgabe von kosmetischen oder pharmazeutischen Flüssigkeiten. Diese Flüssigkeitsspender weisen ein Behältersystem auf, in dem die auszutragende Flüssigkeit vor dem Austrag gespeichert ist.

Solche Flüssigkeitsspender, deren Flüssigkeitsspeicher formstabil ist, also entweder vollständig starr ist oder nach einem Austragvorgang in seine ursprüngliche Form zurückkehrt, bedürfen anders als beispielsweise Tuben eines Volumenausgleichs in Form einströmender Luft, damit sich nicht schrittweise ein benutzungshemmender Unterdruck im Flüssigkeitsspeicher aufbaut.

Mit der einströmenden Luft ist jedoch grundsätzlich auch eine Verunreinigung der Flüssigkeit möglich. Aber auch abseits von Verunreinigungen kann das Einströmen der Luft problematisch sein, da es Oxidationsprozesse bewirkt, die je nach Flüssigkeit deren Wirksamkeit oder deren Aroma negativ beeinflussen können.

Um dies zu verhindern, sind so genannte "Airless"-Systeme bekannt, bei denen vorgesehen ist, dass die einströmende Luft von der Flüssigkeit isoliert bleibt. Hierbei stellen neben Schleppkolbensystemen auch Behältersysteme mit einem formstabilen Außenbehälter und einem innerhalb der Außenbehälter angeordneten kollabierbaren Innenbehälter eine wichtige Gruppe da. Bei diesen Systemen, die gemeinsam mit ihren Herstellungsverfahren für die vorliegende Erfindung gattungsbildend sind, strömt die Luft in einen Zwischenbereich zwischen der InnenwandungdesAußenbehälters und der Außenseite des beutelartigen Innenbehälters ein. Der Beutel verringert mit zunehmender Entleerung des Flüssigkeitsspeichers sein Außenvolumen, wobei die eingeströmte Luft eine Unterdruckbildung verhindert.

Die genannten Behältersysteme mit Beutel können dadurch hergestellt werden, dass zunächst eine getrennte Herstellung von beutelartigem Innenbehälter und Außenbehälter erfolgt und anschließend der Innenbehälter in den Außenbehälter eingesetzt wird. Dieses Verfahren ist vergleichsweise aufwändig. Weiterhin ist es hiermit recht schwierig, den im Außenbehälter zur Verfügung stehenden Raum vollständig durch den Innenbehälterzu nutzen, insbesondere wenn dieser eine von der Zylinderform abweichende Formgebung aufweist.

Daneben ist auch ein System bekannt, bei dem eine gemeinsame Herstellung des Außenbehältersund und des Innenbehälters erfolgt, indem in einem Koextrusionsverfahren ein doppelwandiges Hohlprofil erzeugt wird, welches dann durch Trennvorgänge in einzelne zylindrische Abschnitte zergliedert wird. Jeder dieser Abschnitte bildet nach einigen weiteren Bearbeitungsschritten ein Behältersystem, wobei die innere Lage des Hohlprofils den beutelartigen Innenbehälter und die äußere Lage den Außenbehälter bildet. Nachteilig an diesem Verfahren ist die begrenzte Gestaltungsmöglichkeit die Form betreffend. Systembedingt ist das Hohlprofil zylindrisch, so dass schwierig ist, Außenbehälter nichtzylindrischer Form herzustellen. Bei nichtzylindrischen Formen ist es insbesondere schwierig eine Beutelwandung gleichmäßiger Dicke zu erzeugen. So muss bei der Herstellung von bauchig geformten Behältern im Bereich des größten Flaschenquerschnittes und somit maximaler Ausdehnung des Beutels die Mindestschichtdicke des Beutels sichergestellt werden. Dies bedeutet aber gleichzeitig, dass im Bereich mit geringerem Flaschenquerschnitt der Beutel aufgrund geringere Ausdehnung eine höher Schichtdicke aufweist, da sowohl im Bereich des größeren wie auch den kleineren Flaschenquerschnitts das zylindrische Hohlprofil eine übereinstimmende Ausgangsdicke der den Beutel bildenden Schicht aufweist. Die größere Dicke der Beutelwandung im Bereich eines geringeren Flaschenquerschnitts führt zu einer unerwünschten Versteifung des Beutels und somit zu einem ungünstigen Verhalten beim Kollabieren bzw. Verschlechterung der Faltung des Beutels und damit einhergehend zu einer verminderten Restenleerung des mit Medium befüllten Beutels.

Solche nichtzylindrischen Außenbehälter sind jedoch zum Zwecke der für den Endkunden erkennbaren Produktdifferenzierung wünschenswert.

Aus der JP 2002-293317 A und der JP 2001-315746 A sind Behälter bekannt, deren Behälterkörper einen Kern aus einem organischen Material wie Papier oder Bambus aufweisen und die innenseitig und teilweise auch außenseitig von einer Schutzschicht überzogen sind, wobei die innenseitige Schutzschicht vom Kern lösbar ist. Als Materialien für die Schutzschicht werden Polyethylen, Polypropylen, Polystyrol, Polyester (einschließlich PET und PBT), Nylon, Polyacrylnitril, Ethylen-Vinylalkoholharz, säuremodifiziertes Polyethylen, säuremodifiziertes Polypropylen und Elastomer vorgeschlagen.

Aus der WO 82/01176 A1 ist eine Aerosol-Container bekannt, der eine innenseitige flexible Wandungslage aufweist, die sich bei Entleerung des Behälters bestimmungsgemäß von der Innenseite eines Außenbehälters löst. Dabei schlägt das Dokument weiterhin vor, zwischen der flexiblen Wandungslage und dem Außenbehälter eine schwach ausgebildete Trennlage vorzusehen. Zur Aufbringung der flexiblen Wandungslage schlägt das Dokument unter anderem das Aufsprühen vor.

Aus der EP 0893356 A1 ist ein doppellagiger Behälter bekannt, dessen Außenhülle starr und porös ist und dessen Innenhülse kollabierbar ausgestaltet ist.

### AUFGABE UND LÖSUNG

Aufgabe der Erfindung ist es, ein Verfahren zur Herstellung eines Behältersystems zur Verfügung zu stellen, dass in vorteilhafter Weise die Ausnutzung des Innenraums eines Außenbehälters gestattet und/oder die Herstellung nichtzylindrischer Außenbehälter ermöglicht. Aufgabe der Erfindung ist es weiterhin, ein hierauf basierendes Verfahren zur Herstellung eines Flüssigkeitsspenders sowie ein entsprechendes Behältersystem selbst sowie den das Behältersystem umfassenden Flüssigkeitsspender zur Verfügung zu stellen.

Diese Aufgabe wird durch das Verfahren zur Herstellung eines Behältersystems nach Anspruch 1, durch das Verfahren zur Herstellungeines Flüssigkeitsspenders nach Anspruch 11, durch das Behältersystem nach Anspruch 12 sowie durch den Flüssigkeitsspender nach Anspruch 14 gelöst. Vorteilhafte Weiterbildungen sind in den zugehörigen Unteransprüchen und der nachfolgenden Beschreibung genannt.

Die Erfindung betrifft primär das genannte Verfahren zur Herstellung eines Behältersystems mit einem formstabilen Außenbehälter und einem innerhalb der Außenbehälter angeordneten kollabierbaren Innenbehälter in Art eines Beutels.

Der Außenbehälter ist entweder starr oder gegen eine Rückstellkraft verformbar. Er ist vorzugsweise zur Ankoppelung eines Austragkopfes ausgebildet, insbesondere indem er mit einem Halsabschnitt versehen ist, der zur Ankopplung des Austragkopfes ein Gewinde oder anderweitige form- oder kraftschlüssig haltende Kopplungsmittel aufweist. Auch eine einstückige Anformung des Austragkopfes mit Austragöffnung ist möglich.

Der Innenbehälter ist in Art eines Beutels ausgebildet und weist korrespondierend mit dem Außenbehälter eine Öffnung im Bereich des Halsabschnitts auf. Er kann stoffschlüssig mit dem Außenbehälter verbunden sein oder durch Anbringung eines Austragkopfes im Bereich der Öffnung oder des Austragkopfes fixierbar sein. Der Innenbehälter ist kollabierbar, wobei hierunter die Eignung des Innenbehälters verstanden wird, ohne Erzeugung relevanter Rückstellkräfte volumenreduziertzu werden.

Zwischen Innenbehälter und Außenbehälter ist im Betrieb ein Belüftungsbereich vorgesehen. Das mit dem Verfahren herzustellende Behältersystem weist diesen Belüftungsbereich jedoch unmittelbar nach Herstellung des Innenbehälters im Außenbehälter noch nicht auf, da der Innenbehälter flächig an der Innenseite des Außenbehälters anliegt. Innenbehälter und Außenbehälter sind jedoch vorzugsweise derart beschaffen, dass alleine der im Betrieb sich im Innenbehälter zwischenzeitlich einstellende Unterdruck von üblicherweise etwa 400 mbar ausreicht, die Trennung von Innenbehälter und Außenbehälter zu bewirken.

Ausgehend von dem vorgefertigten Außenbehälter wird im Rahmen des erfindungsgemäßen Verfahrens mindestens eine Schicht eines Beutelmaterials an einer Innenwandung des Außenbehälters aufgebracht. Das Beutelmaterial wird zu diesem Zweck in flüssiger Form oder in Pulverform auf der Innenwandung aufgebracht, wo es nach Erstarren oder Verschmelzen eine Lage einer Wandung des Innenbehälters bildet, die sich bestimmungsgemäß beim Kollabieren des Innenbehälters von der Innenwandung des Außenbehälters löst.

Die Besonderheit dieses Verfahrens liegt somit darin begründet, dass der Innenbehälter im zuvor bereits hergestellten Außenbehälter hergestellt wird. Hierzu wird das Ausgangsmaterial, das eine Lage des Innenbehälters bilden soll, in flüssiger, gegebenenfalls versprühter, oder pulverförmiger Form eingebracht und auf der Innenseite des Außenbehälters als Schicht verteilt. Dort bildet es, gegebenenfalls unterstützt durch Erwärmung, Bewegung oder andere Maßnahmen, eine Lage des Innenbehälters, die sich später im Betrieb bestimmungsgemäß von der Innenseite des Außenbehälters löst. Grundsätzlich ist es auch möglich, dieses Lösen noch im Zuge des Herstellvorgangs gezielt zu bewirken, beispielsweise durch Anlegen eines Überdrucks im Belüftungsbereich bzw. eines Unterdrucks im Innenbehälter.

Damit Ausgleichsluft in den Belüftungsbereich gelangen kann, ist ein Belüftungskanal oder eine anderweitige Belüftungsmöglichkeit vorzusehen. Vorzugsweise ist eine Durchbrechung im Außenbehälter hierfür vorgesehen, die je nach Anwendungsfall als Kapillarkanal ausgebildet sein kann, um eine besonders langsame Belüftung zu erzwingen, hierdurch jedoch auch die Möglichkeit zu bieten, das Behältersystem als Quetschflasche auszugestalten.

Es können nacheinander mehrere die Wandung des Innenbehälters gemeinsam bildende Lagen dadurch erzeugt werden, dass jeweils eine Schicht eines Beutelmaterials an der Innenwandung des Außenbehälters bzw. auf einer schon zuvor aufgebrachten Lage des Innenbehälters aufgebracht wird.

Durch mehrere Lagen, die nacheinander erzeugt werden, lassen sich materialspezifische Vorteile kombinieren, wie im Weiteren noch erläutert wird. Je nach Materialkombinationen kann es vorteilhaft sein, die Herstellung der Lagen zeitlich überlappen zu lassen, also eine weitere Lage herzustellen, während die vorangegangene noch nicht erstarrt ist, da so eine besonders innige Verbindung zwischen den Lagen geschaffen werden kann.

Es wird bei einer besonderen Variante des Verfahrens noch vor Einbringen einer ersten Schicht des Beutelmaterials mindestens eine Schicht eines Einfärbematerials an der Innenwandung des Außenbehälters aufgebracht. Dieses Einfärbematerial wird zu diesem Zweck in flüssiger Form oder in Pulverform auf der Innenwandung aufgebracht, wo es nach Erstarren oder Verschmetzen eine Farblage bildet, die entweder bestimmungsgemäß an der Innenseite verbleibt oder die sich bestimmungsgemäß beim Kollabieren des Innenbehälters von der Innenwandung des Außenbehälters löst und eine Außenlage des Innenbehälters bildet.

Eine solche Farblage kann also eine Innenlage des Außenbehälters oder eine Außenlage des Innenbehälters bilden. Die Steuerung, ob die Farblage am Innen- oder am Außenbehälter verbleibt, wird über die verwendeten Materialien gesteuert. Naturgemäß ist eine solche Farblage nur dann sinnvoll, wenn der Außenbehälter zumindest abschnittsweise transparent oder teiltransparent ist.

Es wird bei einer weiteren besonderen Variante des Verfahrens noch vor Einbringen einer ersten Schicht des Beutelmaterials und/oder einer Schicht des Einfärbematerials eine Schicht eines Trennmaterials an einer Innenwandung des Außenbehälters aufgebracht. Dieses Trennmaterial wird zu diesem Zweck in flüssiger Form oder in Pulverform auf der Innenwandung aufgebracht, wo es eine Trennlage bildet, die bestimmungsgemäß das Lösen des Innenbehälters von der Innenwandung des Außenbehälters begünstigt.

Die Trennlage dient dem Zweck, ein problemloses Ablösen von Außenbehälter und Innenbehälter zu gestatten. Sie ist daher vorzugsweise aus einem Material beschaffen, welches mit dem Material der äußersten Lage des Innenbehälters und/oder mit dem Material des Außenbehälters keine zu feste Verbindung/Haftung eingeht. Beispielsweise kann Silikon oder ein silikonbasiertes Material oder Silikonkautschuk hier genutzt werden. Auch ein Polyolefin eignet sich als Trennlage.

Eine Trennlage ist jedoch nicht zwingend erforderlich. Wenn der Außenbehälter und der Innenbehälter an den Kontaktflächen so beschaffen ist, dass keine oder nur geringe chemische Bindungen, insbesondere kovalente Bindungen entstehen, kann auf eine Trennlage verzichtet werden. Auch das gezielte Ablösen des Innenbehälters vom Außenbehälter mittels Überdruck/Unterdruck noch während der Herstellung kann die Trennlage verzichtbar machen.

Die Trennlage kann auch dem Zweck dienen, eine erhöhte Freiheit bei der Auswahl der Materialien zu erzielen. Ist keine Trennlage vorhanden, so kann es ein Problem darstellen, wenn die äußerste Lage des Innenbehälters aus einem Material mit einem hohen Schmelzpunkt besteht, da dies mit der Gefahr einhergeht, dass bei dessen Einbringung die Innenseite des Außenbehälters aufgeschmolzen oder anderweitig beeinflusst wird. Die Trennlage kann hier also auch eine thermische Trennung bewirken.

Das Trennmaterial ist bei einer besonderen Variante so gewählt, dass es eine poröse und/oder luftdurchlässige Trennlage bildet. Der Außenbehälter kann eine Belüftungsdurchbrechung aufweisen, deren in den Innenraum des Außenbehälters weisendes Ende von der porösen Trennlage überdeckt wird. Die poröse Trennlage kann beispielsweise ein Keramikpulver umfassen, welches in Pulverform oder in Form einer Suspension eingebracht wird. Ggf. nach Verdunsten einer Trägerflüssigkeit bildet das Pulver eine Schicht, die bei nachfolgendem Einbringen der nächsten Schicht nicht vollständig von dieser ausgefüllt wird, so dann die Möglichkeit verbleibt, dass Luft zum Zwecke des Trennens des Innenbehälters vom Außenbehälter in diese Trennschicht einströmt und die Trennung dadurch erleichtert.

Durch diese Porosität wird die Lösbarkeit des Innenbehälters vom Außenbehälter begünstigt, da hierdurch gleichsam bereits im Zuge der Herstellung der Belüftungsbereich zwischen Innenbehälter und Außenbehälter geschaffen wird. Umgebungsluft kann in der porösen Lage zwischen Innenbehälter und Außenbehälter strömen, auch wenn der Innenbehälter und der Außenbehälter noch aneinander anhaften.

Die einfachste Variante zur Durchführung des Verfahrens sieht vor, dass das Beutelmaterial in den Außenbehälter einströmt und hier auf der Innenseite des Außenbehälters aufgebracht wird oder alternativ der Außenbehälter vollständig hiermit befüllt wird und überschüssige Flüssigkeit dann entfernt wird.

Bei einer der anderen Varianten des Verfahrens wird das Beutelmaterial, das Trennmaterial und/oder das Einfärbematerial zur Bildung einer Schicht in flüssiger Tröpfchenform mittels eines Sprühverfahrens auf der Innenseite des Außenbehälters bzw. auf einer dort zuvor aufgebrachten Schicht aufgebracht.

Das entsprechende Material, insbesondere ein Kunststoff, wird also in verflüssigter Form und vorzugsweise unter Beigabe von Gas/Luft unter Druck eingebracht. Hierdurch lässt sich die Verteilung des Materials gut steuern.

Dabei ist es von besonderem Vorteil, wenn nach Aufbringen der Schicht über ein Sprühverfahren die Schicht erwärmt wird, so dass hierdurch eine Homogenisierung der Schichtdicke und/oder eine Verfüllung von beim Sprühen verbliebenen Leerstellen bewirkt wird.

Das auf der Innenseite des Außenbehälters oder einer zuvor bereits erzeugten Lage aufgebrachte Material musssich nach Einbringungverfestigen, um einestabile Lage des Innenbehälters auch nach Trennung vom Außenbehälter zu bilden. Hierfür stehen verschiedene Möglichkeiten zur Verfügung. Die bevorzugte sieht vor, dass das entsprechende Beutelmaterial im thermisch verflüssigtem Zustand einbracht wird und im Zuge des Abkühlens solidifiziert. Alternativ kann das Material auch gemeinsam mit einem Lösungsmittel eingebracht werden, welches sich anschließend, ggf. unter Zugabe von Wärme, verflüchtigt und hierdurch die Verfestigung des Innenbehälters bewirkt.

Bei einer anderen Variante des Verfahrens wird das Beutelmaterial, das Trennmaterial und/oder das Einfärbematerial zur Bildung einer Schicht in Pulverform auf der Innenseite des Außenbehälters bzw. auf einer dort zuvor aufgebrachten Schicht aufgebracht.

Korrespondierend mit der flüssigen Einbringung kann auch hierbei vorgesehen sein, dass das Pulver, vorzugsweise in Form körniger Partikel zwischen 1 und 100 µm Größe, ähnlich wie beim Pulverbeschichten mit einem pistolenartigen Werkzeug eingeblasen wird und an der Innenseite des Außenbehälters oder einer zuvor eingebrachten Lage anhaftet. Gegebenenfalls sind Vorbehandlungsschritte an der Innenseite vorzusehen, wie beispielsweise die Aufbringung einer leitfähigen Schicht (Primer), wenn der Außenbehälter aus nicht leitfähigem Material besteht und die Anhaftung elektrostatisch vorgesehen ist. Auch andere Möglichkeiten des Anhaftens sind jedoch möglich, beispielsweise die Aufbringung von Feuchtigkeit auf der Innenseite des Außenbehälters.

Weiterhin ist es möglich, das Beutelmaterial in Pulverform unmittelbar als Teil einer Suspension mit einer Trägerflüssigkeit auf die Innenseite des Außenbehälters in versprühter oder nicht versprühter Form aufzubringen, von wo die Trägerflüssigkeit verdunstet und das Pulver zurücklässt.

In allen Fällen ist vorzugsweise vorgesehen, dass nach Aufbringen der Schicht aus Pulver die Schicht erwärmt wird, so dass hierdurch ein Aufschmelzen des Pulvers und damit die Bildung einer durchgehenden Schicht bewirkt werden.

Zur weitgehend homogenen Verteilung des Beutelmaterials ist es von Vorteil, wenn das Beutelmaterial nach Einbringung in den Außenbehälter durch Bewegen des Außenbehälters, insbesondere durch Rotation des Außenbehälters um eine oder mehrere Rotationsachsen, eine Verteilung des flüssigen Materials zur Bildung einer umfänglichen und durchgehenden Schicht bewirkt wird.

Für den Innenbehälter werden insbesondere die folgenden Lagen als vorteilhaft angesehen.

Als Trägerlage, die der Wandung des Innenbehälters die eigentliche Stabilität verleiht, ist ein Kunststoff-lonomer vorgesehen, also lonomer aus Ethylen-Methacrylsäure-Copolymeren mit eingelagerten Metall-Ionen, insbesondere mit Natrium- oder Zink-Ionen. Dieses Material weist eine gute Durchstoßfestigkeit sowie hohe Flexibilität und Knickbruchbeständigkeit auf. Zudem hat es einen geringen Schmelzpunkt, so dass bei Nutzung als Außenschicht des Innenbehälters das Anhaften des erzeugten Innenbehälters am Außenbehälter vermieden wird. Besonders gut geeignet sind die von Dupont unter dem Markennamen Surlyn erhältliche Kunststoff-Ionomere.

Von Vorteil ist auch die Nutzung eines Ethylen-Vinylalkohol-Copolymer (EVOH). Dieses Material verhindert wirksam das Eindringen von Sauerstoff in den Innenbehälter und verringert so als eine Art Sperrlage die Gefahr von Oxidation.

Erfindungsgemäß ist eine Lage aus Polyamid oder alternativ aus Polyethylen, insbesondere LDPE oder LLDPEvorgesehen. Insbesondere als innerste Lage sind diese Materialien gut geeignet. Insbesondere Polyamide sind gut geeignet, um Aromen vom Ausdünsten durch die Wandung des Innenbehälters zu verhindern. Alternativ kann hier auch EVA (Ethylen-Vinylacetat-Copolymere) genutzt werden.

Bei zweilagigen Innenbehältern wird eine Schicht eines Kunststoff- lonomer mit einer außenseitigen Schicht von EVOH oder einer innenseitigen Schicht aus Polyamid als besonders vorteilhaft angesehen. Bei einer dreilagigen oder mehrlagigen Gestaltung ist von innen nach außen eine Lage aus Polyamid, dann eine Lage aus Kunststoff-Ionomer und weiterhin eine Lage aus EVOH besonders vorteilhaft. Im Sinne der Ablösbarkeit von der Innenseite des Außenbehälters ist auch die Anordnung des Kunststoff-Ionomer als letzter Lage vorteilhaft.

Für den Innenbehälter ist vorgesehen, dass dieser mindestens eine Schicht aus einem Kunststoff-lonomer aufweist.

Es wird weiter vorgeschlagen, dass der Innenbehälter mindestens eine Schicht aus einem Ethylen-Vinylalkohol-Copolymer aufweist.

Der formstabile Außenbehälter ist derart ausgestaltet, dass er entweder aufgrund des gewählten Materials nicht in relevantem Maße verformbar ist oder Rückstelleigenschaften aufweist, so dass er nach zwischenzeitlicher Volumenreduzierung in seine Ursprungsform zurückkehrt.

Insbesondere wird vorgeschlagen, für das beschriebene Verfahren einen vorgefertigten Außenbehälter zu verwenden, der zumindest eine Schicht aus PP aufweist und/oder zumindest eine Schicht aus Glas aufweist.

Eine besondere Gestaltung ergibt sich, wenn ein vorgefertigter Außenbehälter verwendet wird, der zumindest abschnittsweise eine Wandung aus einem gasdurchlässigen porösen Material aufweist. Bei einersolchen Gestaltung kann auf einen separaten makroskopischen Belüftungskanal verzichtet werden. Stattdessen kann Luft durch die poröse Struktur des Außenbehälters eindringen. Dies erleichtert das Ablösen des Innenbehälters vom Außenbehälter. Eine entsprechende Wandungsgestaltung ist aus der EP 0893356 A1 bekannt.

Die Erfindung betrifft auch ein Verfahren zur Herstellung eines Flüssigkeitsspeichers. Hierbei wird nach Herstellung des Behältersystems nach einem der vorstehenden Ansprüche ein Austragkopf mit einer Betätigungshandhabe und einer Pumpe am Behältersystem angebracht.

Allerdings sind auch Alternativen zu einem solchen Austragkopf denkbar. So kann auch ein Quetschflaschenkonzept ohne Betätigungshandhabe und Pumpe genutzt werden, bei dem bestimmungsgemäß bei Benutzung vorgesehen ist, dass der Flüssigkeitsspeicher selbst zusammengedrückt wird. Dies geht zwar damit einher, dass auch die Luft zwischen Innenbehälter und Außenbehälter komprimiert wird. Wenn jedoch ein Belüftungskanals mit hoher Drosselwirkung oder gar ein Rückschlagventil im Bereich des Belüftungskanals vorgesehen wird, kann eine zum Austrag ausreichende Druckbeaufschlagung der Flüssigkeit auch bei gleichzeitiger Druckbeaufschlagung der Luft erzielt werden.

Wie eingangs bereits erwähnt, kann diese Anbringung des Austragkopfes insbesondere auch dem Zweck dienen, im Öffnungsbereich des Außenbehälters eine sichere Fixierungzwischen Innenbehälter und Außenbehälter zu schaffen. Dies kann alternativ aber auch auf anderen Wegen erzielt werden, beispielsweise durch eine trennungshemmende Geometrie in diesem Bereich an der Innenseite des Außenbehälters.

Die Erfindung betrifft weiterhin auch ein Behältersystem zur Verwendung als Teil eines Flüssigkeitsspenders, das einen formstabilen Außenbehälter und einen innerhalb derAußenbehälter angeordneten kollabierbaren Innenbehälter in Art eines Beutels aufweist und das mit dem oben beschriebenen Verfahren hergestellt worden ist.

Hierbei ist es besonders von Vorteil, wenn der Außenbehälter über eine Mantelwandung und eine Bodenwandung verfügt und die Mantelwandung eine von einer zylindrischen Form abweichende Formgebung aufweist.

Das beschriebene Verfahren ist insbesondere bei solchen nichtzylindrischen Formen von Vorteil, da es ein Ausnutzen des Innenvolumens besonders gut ermöglicht. So können beispielsweise bauchige Außenbehälter hiermit vollständig befüllt werden.

Die Erfindung betrifft weiterhin auch einen Flüssigkeitsspender mit einem solchen Behältersystem und einem Austragkopf. Der Austragkopf verfügt dabei vorzugsweise über eine Betätigungshandhabe, mittels derer eine Pumpe betätigt werden kann. Wie oben bereits beschrieben, sind aber auch Gestaltungen mit Austragköpfen ohne Pumpe und Betätigungshandhabe denkbar und fallweise sinnvoll.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt einen Flüssigkeitsspender, dessen Behältersystems mit dem vorbeschriebenen Verfahren hergestellt worden ist.
Fig. 2A bis 2D sowie 3A bis 3D zeigen zwei Verfahren zur Herstellung des Behältersystems ausgehend vom zuvor bereits hergestellten Außenbehälter, wobei das Beutelmaterial zur Bildung des Innenbehälters in flüssiger Form eingebracht wird.
Fig. 4A bis 4D zeigen ein Verfahren zur Herstellung des Behältersystems, bei dem ausgehend vom zuvor bereits hergestellten Außenbehälter das Beutelmaterial zur Bildung des Innenbehälters in versprühter Form eingebracht wird.
Fig. 5A bis 5D zeigen ein Verfahren zur Herstellung des Behältersystems, bei dem ausgehend vom zuvor bereits hergestellten Außenbehälter das Beutelmaterial zur Bildung des Innenbehälters in Pulverform eingebracht wird.
Fig. 6A und 6B, 7A und 7B, 8A und 8B, 9A und 9B sowie 10A und 10B zeigen verschiedene Gestaltungen des Außenbehälters und des Innenbehälters, die jeweils mit einem der Verfahren gemäß der Fig. 2A bis 5D oder Kombinationen hiervon herstellbar sind.

### DETAILLIERTE BESCHREIBUNG DERAUSFÜHRUNGSBEISPIELE

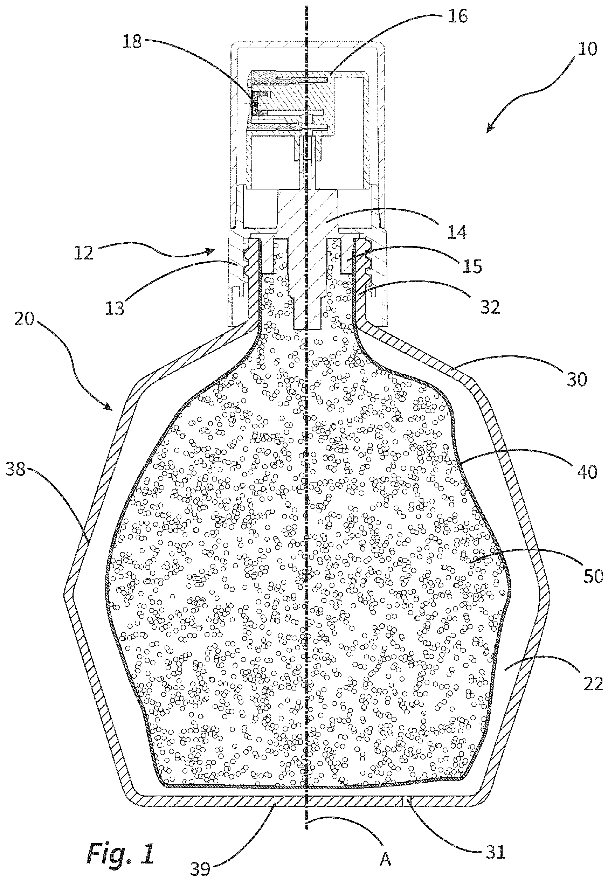

Fig. 1 zeigt einen erfindungsgemäßen Flüssigkeitsspender 10, der mittels des erfindungsgemäßen Verfahrens hergestellt ist.

Der Flüssigkeitsspender 10 verfügt über einen Austragkopf 12, der auf ein Behältersystem 20 aufgeschraubt ist.

Der Austragkopf 12 ist zum Versprühen von Flüssigkeit aus dem Behältersystem 20 ausgebildet und verfügt hierfür über ein Gehäuse 13 mit Innengewinde und einer nicht mit Details dargestellten Pumpeinrichtung 14. Auf die Pumpeinrichtung 14 ist eine Austragkopf 12 mit einer Betätigungshandhabe 16 aufgesetzt, der niedergedrückt werden kann, um die Pumpe 14 zu betätigen und so Flüssigkeit aus dem Behältersystem 20 zu einer Austragöffnung 18 zu fördern, an der die Flüssigkeit in zerstäubter Form ausgetragen wird.

Das Behältersystem 20 ist als sogenanntes Airless-Behältersystem ausgebildet. Esverfügt über einen formstabilen Außenbehälter 30 und einen kollabierbaren und beutelartigen Innenbehälter 40. Die auszutragende Flüssigkeit ist im Innenbehälter 40 aufgenommen, der durch die Flüssigkeit vollständig befüllt ist. Wenn im Zuge der fortschreitenden Entleerung des Flüssigkeitsspeichers das Innenvolumen des Innenbehälters 40 sinkt, wird dies dadurch kompensiert, dass durch eine Belüftungsdurchbrechung 31 im Außenbehälter 30 Luft in einen Belüftungsbereich 22 zwischen dem Außenbehälter 30 und dem Innenbehälter 40 einströmt.

Der Außenbehälter weist einen Behälterhals 32 auf, im Bereich dessen das Gehäuse 13 des Austragkopfes 12 aufgeschraubt ist. Im Bereich der Pumpeinrichtung 14 ist ein Klemmkragen 15 vorgesehen, der die Wandung des Innenbehälters 40 gegen die Innenseite des Behälterhalses 32 drückt und dadurch eine Klemmverbindung an dieser Stelle schafft.

Der zur Mittelachse A rotationssymmetrische ßenbehälter 30 weist eine nicht-zylindrische, vorliegend eher bauchige, Formgebung auf.

Um trotz einer solchen Formgebung einen Innenbehälter 40 vorsehen zu können, der das Innenvolumen des Außenbehälters 30 weitgehend vollständig ausnutzt, wird ein Herstellungsverfahren verwendet, welches in den weiteren Figuren gezeigt und nachfolgend erläutert wird.

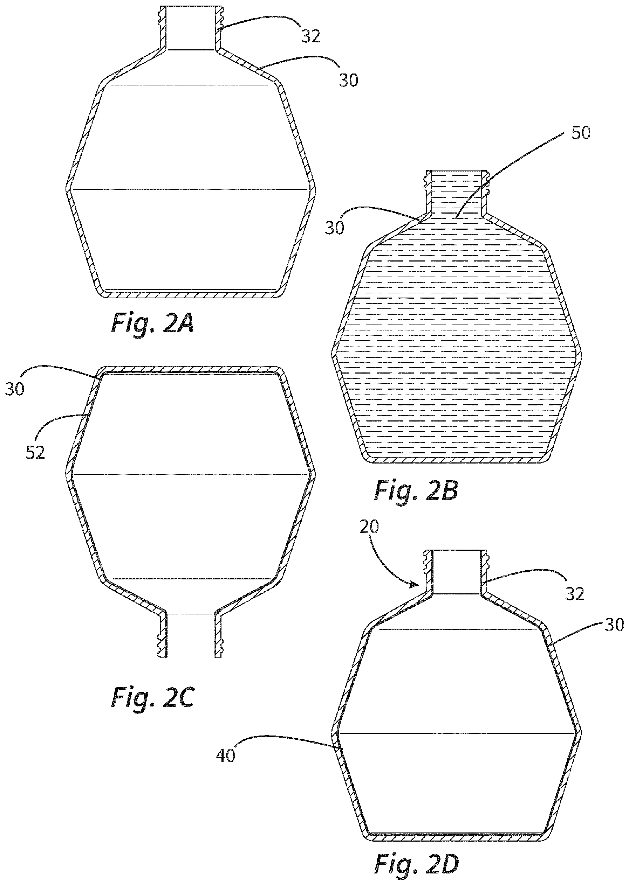

Die Fig. 2A bis 2D zeigen eine erste Variante dessen. Ausgehend vom zuvor beispielsweise durch Spritzgießen oder ein Streckblasverfahren hergestellten Außenbehälter 30 wird ein flüssiger Kunststoff 50 in den Außenbehälter 30 eingebracht, dessen Schmelztemperatur unterhalb derer des Materials des Außenbehälters30 liegt. Anschließend wird in der in Fig. 2C verdeutlichten Weise das aufgeschmolzene Kunststoffmaterial zum überwiegenden Teil wieder aus dem Außenbehälter 30 entfernt, so dass nur eine die Innenseite des Außenbehälters 30 benetzende Schicht 52 des Kunststoffs übrig bleibt. Diese kann anschließend nochmals unterhalb der Schmelztemperatur oder Aufweichungstemperatur des Außenbehälters 30 erwärmt werden, so dass sich möglicherweise noch gegebene Inhomogenitäten in der Schichtdicke vermindern. Sobald der Kunststoff abgekühlt ist, bildet er eine in sich stabile, jedoch verformbare Lage, die dann, wie in Fig. 2D dargestellt, den Innenbehätter 40 bildet.

Wie anhand der Fig. 2D zu erkennen ist, nimmt dieser Innenbehälter 40 nahezu das vollständige Innenvolumen des Außenbehälters ein, so dass eine große Flüssigkeitsmenge zum Zwecke des Austrags anschließend eingefüllt werden kann. Im Betrieb löst sich der Innenbehälter dann von der Innenseite desAußenbehälters 30 und ermöglicht so die Volumenverringerungdes Innenbehälters 40.

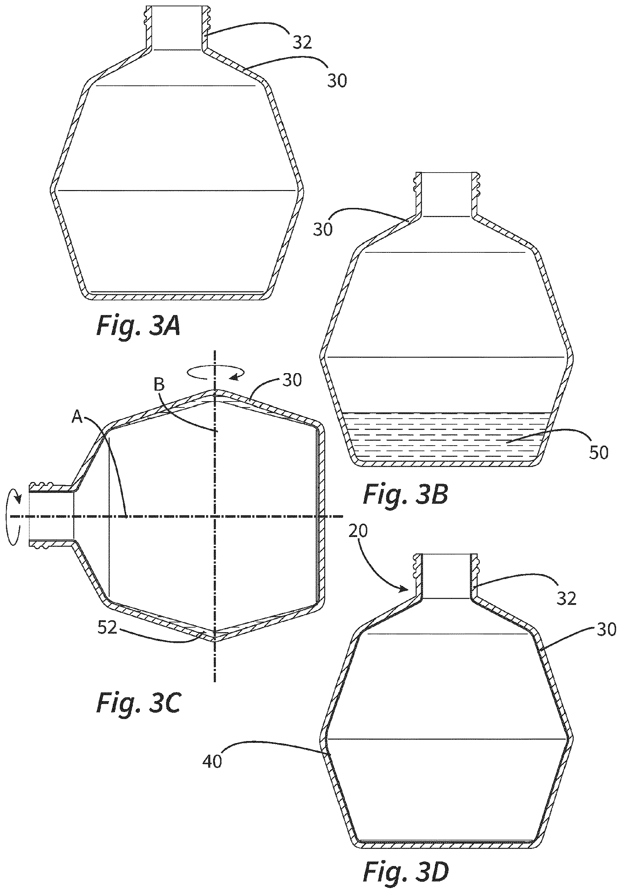

Bei der Gestaltung gemäß der Fig. 3A bis 3D ist vorgesehen, dass eine geringere Menge von aufgeschmolzenem Kunststoff 50 in den Außenbehälter 30 eingebracht wird. Dieser wird anschließend durch Bewegen des Außenbehälters 30 auf der Innenseite des Außenbehälters 30 verteilt. Insbesondere kann eine Rotation des Außenbehälters 30 genutzt werden, wobei vorzugsweise zur homogenen Verteilung eine Rotation um unterschiedliche Drehachsen erfolgt, vorliegend beispielhaft die Längsachse A und eine hierzu orthogonale Achse. Das Ergebnis ist, wie in Fig. 3D dargestellt, ähnlich dem des ersten Ausführungsbeispiels der Fig. 2A bis 2D. Ggf. ist es erforderlich, die entstandene Lage Kunststoff, die den Innenbehälter 40 bildet, im Bereich des Behälterhalses 32 noch vor der Verfestigung der Schicht 52 zu entfernen oder anschließend mechanisch zu öffnen.

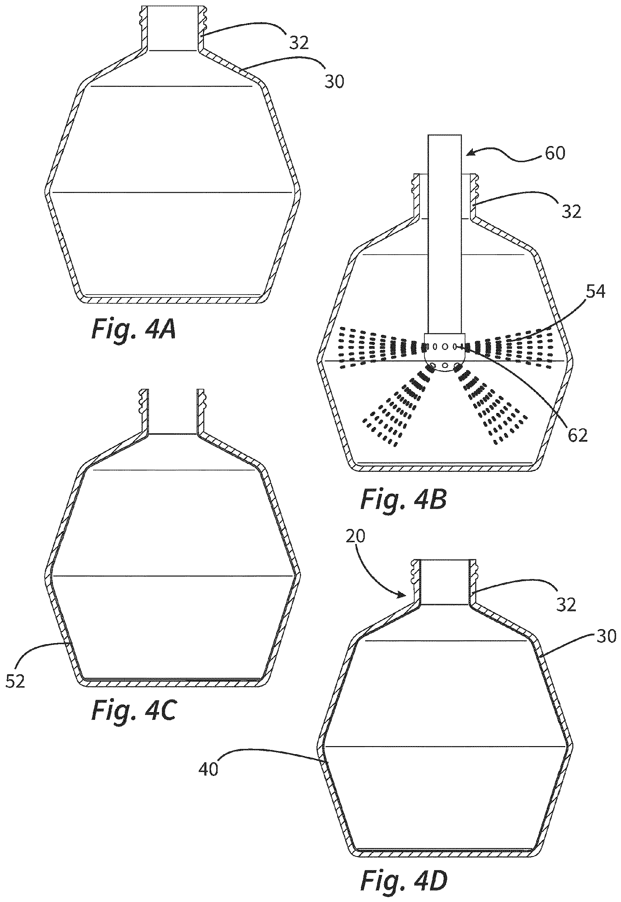

Die Fig. 4A bis 4D zeigen eine weitere Variante. Hierbei wird der flüssige Kunststoff nicht unmittelbar in flüssiger Form eingebracht, sondern in Form feiner Tröpfchen, also gleichsam versprüht. Hierfür ist eine Vorrichtung 60 mit Sprühöffnung 62 vorgesehen. Das Versprühen kann unter zusätzlicher Zuführung von Luft, insbesondere erhitzter Luft, erfolgen. Wiederum wird, wie Fig. 4C zeigt, hierdurch auf der Innenseite des Außenbehälters 30 eine durchgehende Schicht von Kunststoffmaterial aufgebracht, die nach dem Verfestigen den Innenbehälter 40 bildet.

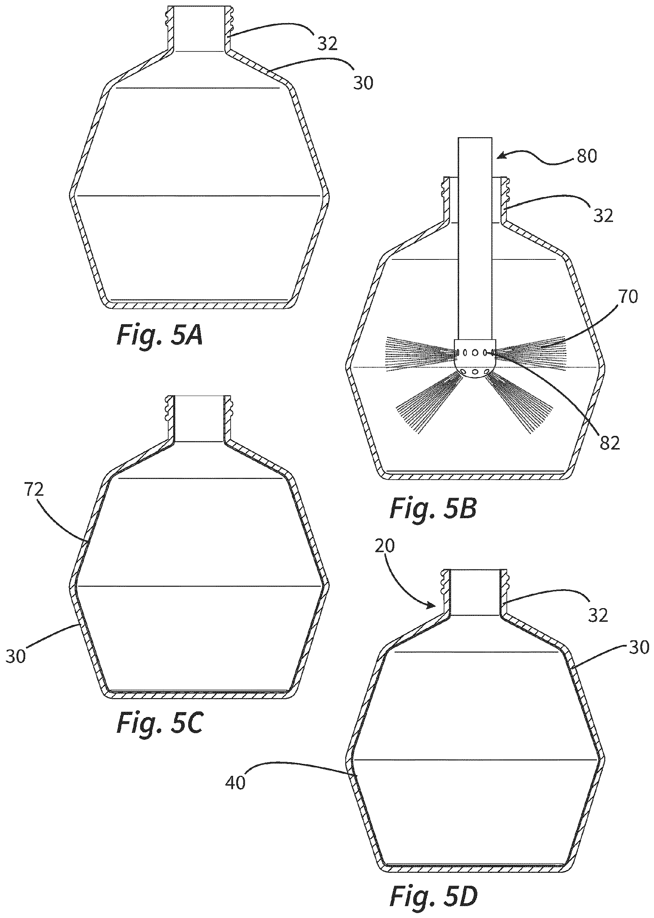

Die Fig. 5A bis 5D zeigen eine alternative Gestaltung. Bei dieser wird der Kunststoff nicht in flüssiger Form eingebracht, sondern in Form eines Pulvers. Rein exemplarisch ist hierfür ein Austragelement 80 vorgesehen, welches in den Außenbehälter 30 eingebracht wird und durch das Pulver abgegeben wird. Hierfür sind Austrittsöffnungen 82 vorgesehen. Das Pulver schlägt sich in der in Fig. 5C gezeigten Weise wiederum auf der Innenseite des Außenbehälters 30 nieder. Sofern das Pulver hier auf Basis von elektrostatischen Kräften halten soll, bedarf es eines Außenbehälters 30, der leitfähig ist. Es ist jedoch auch möglich, zunächst eine haftvermittelnde Schicht in den Außenbehälter 30 einzubringen und erstanschließend das Pulvereinzubringen. So ist es möglich, die Innenseite des Außenbehälters 30 mit Feuchtigkeit zu benetzen, damit das Pulver hier anhaftet. Auch eine Benetzung mit einer leitfähigen Flüssigkeit (Primer) kann zum Zwecke des elektrostatischen Anhaftens gewählt werden. Das Pulver wird vorzugweise vor dem Austrag elektrostatisch aufgeladen.

Die noch aus Einzelpartikeln bestehende Pulverschicht 72, die in Fig. 5C dargestellt ist, wird anschließend durch Erwärmen des Behälters aufgeschmolzen und bildet eine durchgängige Lage, die anschließend den Innenbehälter 40 bildet.

Nicht dargestellt ist eine Variante, bei der das Pulver in Form einer Suspension in einer Trägerflüssigkeit eingebracht wird. Ein solches Verfahren würde jedoch in Hinblick auf die Darstellungen den Fig. 2A bis 4D gleichen.

Die genannten Verfahrensweisen bezogen sich zum Zwecke der Vereinfachungauf nur eine Lage, die den Innenbehälter 40 bildet. Erfindungsgemäß ist es jedoch vorgesehen, dass mehrere Lagen Verwendung finden, die jeweils spezielle Funktionen übernehmen.

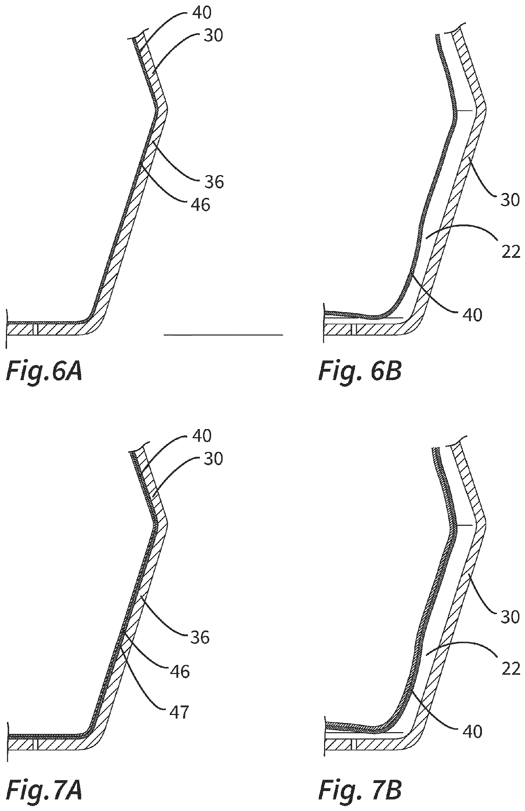

Die Fig. 6A und 6B zeigen eine nicht von der Erfindung umfasste Variante mit nur einer Lage 46, die auf der Innenseite des Außenbehälters 30 aufgebracht wird und sich, wie Fig. 6B zeigt, im Betrieb vom Außenbehälter 30 löst.

Die Fig. 7A und 7B zeigen eine Gestaltung, bei der der Innenbehälter 40 zwei Lagen 46, 47 aufweist. Hier könnte beispielsweise die innere Lage eine Polyamidlage sein, die die Aromen in Flüssigkeit besonders gut vor dem Austreten schützt, während die äußere Lage eine Kunststoff-Ionomer-Lage sein könnte, die wiederum die mechanischen Eigenschaften des Innenbehälters 40 bestimmt.

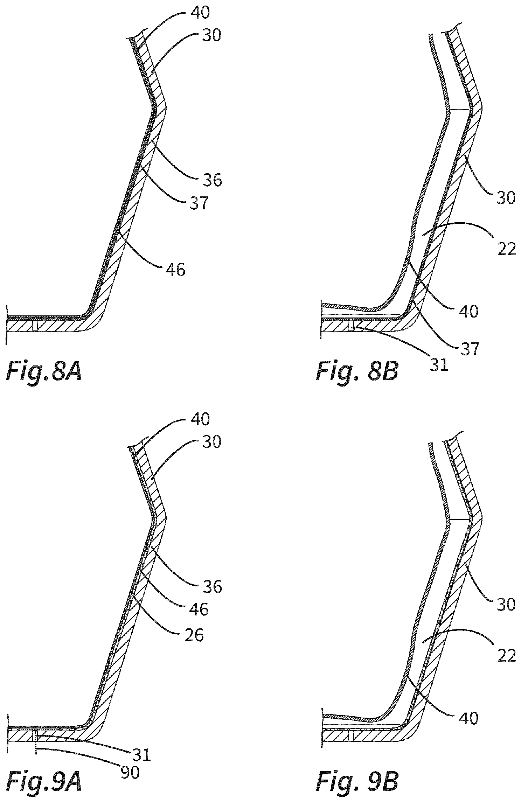

Bei der Gestaltung der Fig. 8A und 8B ist der Innenbehälter 40 wiederum nur einlagig ausgebildet und daher nicht von der Erfindung umfasst. Es werden dennoch zwei Lagen nacheinander in der in den Fig. 2A bis 5D beschriebenen Weise aufgebracht. Die zunächst auf der Innenseite des Außenbehälters 30 aufgebrachte Lage 37 ist jedoch eine Farblage, die bestimmungsgemäß beim Lösen des Innenbehälters 40 vom Außenbehälter 30 am Außenbehälter 30 verbleibt. Die Farblage verleiht dem im Übrigen aus transparent milchigem Polypropylen hergestellten Außenbehälter 30 eine Einfärbung, wobei diese aufgrund der innenseitigen Anbringung der Farblage einen besonderen ästhetischen Reiz hat und zudem mechanisch gegen äußere Beaufschlagungen geschützt ist.

Bei der Variante gemäß Fig. 9A und 9B ist wiederum nur eine einlagige und somit von der Erfindung nicht umfasste Gestaltung des Innenbehälters 40 vorgesehen, wobei hier stattdessen auch eine mehrlagige erfindungsgemäße Gestaltung vorgesehen sein könnte. Die Besonderheit bei der Ausgestaltung gemäß den Fig. 9A und 9B liegt darin, dass die erste auf die Innenseite des Außenbehälters 30 aufgebrachte Lage eine Trennlage 26 ist, welche einen funktionalen Zweck nur im Zuge der Herstellung erfüllt. Diese Trennlage 26 gestattet es, eine thermische Isolation herzustellen, durch die das Material der Lage 46 des Innenbehälters 40 eine Schmelztemperatur aufweisen kann, die oberhalb derer des Außenbehälters 30 liegt. Aufgrund der Trennlage 26 kommt es dennoch nicht zu einem Aufschmelzen der Innenseite des Außenbehälters 30. Ein geeignetes Material für eine solche Trennlage ist beispielsweise Silikon oder ein silikonbasiertes Material.

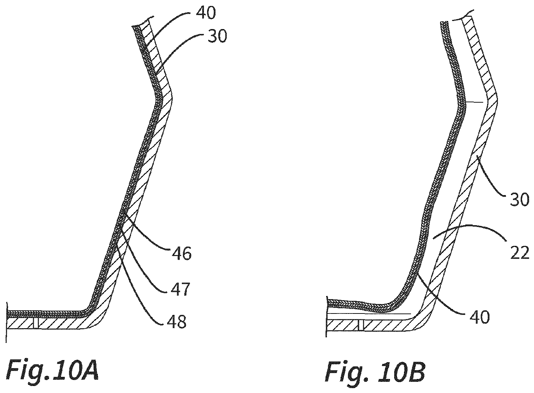

Von Vorteil kann eine solche Trennlage auch deswegen sein, da sie es gestattet, dass bereits vor dem Ablösen des Innenbehälters 40 vom Außenbehälter 30 Luft in den durch die Trennschicht 26 gebildeten Zwischenbereich gelangt. Hierfür muss die Trennschicht 26 aus einem zumindest begrenzt porösen Material bestehen. Dies gestattet es, dass in der durch den Pfeil 90 verdeutlichten Weise Luft in den Zwischenbereich gelangt und das Ablösen des Innenbehälters 40 begünstigt. Eine solche Trennlage kann insbesondere durch ein Keramikpulver gebildet werden, welches in Pulverform oder in Form einer Suspension mit anschließendem Verdunsten der Trägerflüssigkeit zugeführt wird. Bei der Gestaltung gemäß den Fig. 10A und 10B liegt die Besonderheit darin, dass der Innenbehälter 40 hier dreilagig ausgebildet ist. Die Lagen 46, 47, 48 sind exemplarisch bei diesem Beispiel in dieser nicht von der Erfindung umfassten Reihenfolge Polyamid, Kunststoff-Ionomer und EVOH.

## Patentansprüche

1. Verfahren zur Herstellung eines Behältersystems (20) für einen Flüssigkeitsspender (10) mit den folgenden Merkmalen:
a. das Verfahren dient der Herstellungeines Behältersystems (20) mit einem formstabilen Außenbehälter (30) und einem innerhalb derAußenbehälter angeordneten kollabierbaren Innenbehälter (40) in Art eines Beutels, und
b. ausgehend von dem vorgefertigten Außenbehälter (30) wird mindestens eine Lage (46) eines Beutelmaterials (50; 54; 70) an einer Innenwandung des Außenbehälters (30) aufgebracht, und
c. das Beutelmaterial (50; 54; 70) wird zu diesem Zweck in flüssiger Form oder in Pulverform auf der Innenwandung aufgebracht, wo es nach Erstarren oder Verschmelzen eine Lage (46, 47, 48) einer Wandung des Innenbehälters (40) bildet, die sich bestimmungsgemäß beim Kollabieren des Innenbehälters (40) von der Innenwandung desAußenbehälters (30) löst,
**gekennzeichnet durch** das folgende Merkmal:
d. zur Bildung des Innenbehälters werden nacheinander Lagen (46,47,48) aus den folgenden Beutelmaterialien hergestellt von außen nach innen:
- mindestens Kunststoff-lonomerund Polyethylen, insbesondere Kunststoff-Ionomer, EVOH und Polyethylen, und/oder
- mindestens Kunststoff-Ionomer und Polyamid, insbesondere Kunststoff-Ionomer, EVOH und Polyamid, und/oder
- mindestens Kunststoff-Ionomer und LDPE, insbesondere Kunststoff-Ionomer, EVOH, und LDPE.

2. Verfahren nach Anspruch 1 mit dem folgenden zusätzlichen Merkmal:
a. es werden nacheinander mehrere die Wandung des Innenbehälters (40) gemeinsam bildende Lagen (47, 48, 49) dadurch erzeugt, dass jeweils eine Schicht eines Beutelmaterials (50; 54; 70) an der Innenwandung des Außenbehälters (30) bzw. auf einer schon zuvor aufgebrachten Lage (47, 48, 49) des Innenbehälters (40) aufgebracht wird.

3. Verfahren nach einem der vorstehenden Ansprüche mit den folgenden Merkmalen:
a. es wird noch vor Einbringen einer ersten Schicht des Beutelmaterials (50; 54; 70) mindestens eine Schicht eines Einfärbematerials an der Innenwandung des Außenbehälters (30) aufgebracht, und
b. das Einfärbematerial wird zu diesem Zweck in flüssiger Form oder in Pulverform auf der Innenwandung aufgebracht, wo es nach Erstarren oder Verschmelzen eine Farblage (37, 47) bildet, die entweder bestimmungsgemäß an der Innenwandung verbleibt oder die sich bestimmungsgemäß beim Kollabieren des Innenbehälters (40) von der Innenwandung des Außenbehälters (30) löst und eine Außenlage (47) des Innenbehälters bildet.

4. Verfahren nach einem der vorstehenden Ansprüche mit den folgenden Merkmalen:
a. es wird noch vor Einbringen einer ersten Schicht des Beutelmaterials (50; 54; 70) und/oder einer Schicht des Einfärbematerials eine Schicht eines Trennmaterials an einer Innenwandung des Außenbehälters aufgebracht, und
b. das Trennmaterial wird zu diesem Zweck in flüssiger Form oder in Pulverform auf der Innenwandung aufgebracht, wo es eine Trennlage (26) bildet, die bestimmungsgemäß das Lösen des Innenbehälters (40) von der Innenwandung des Außen behälters (30) begünstigt.

5. Verfahren nach Anspruch 4 mit dem folgenden Merkmal:
a. das Trennmaterial ist so gewählt, dass es eine poröse und/oder luftdurchlässige Trennlage (26) bildet, und
b. der Außenbehälter (30) weist eine Belüftungsdurchbrechung (31) auf, deren in den Innenraum des Außenbehälters (30) weisendes Ende von der porösen Trennlage (26) überdeckt wird.

6. Verfahren nach einem der vorstehenden Ansprüche mit dem folgenden Merkmal:
a. das Beutelmaterial (50; 54; 70), das Trennmaterial und/oder das Einfärbematerial wird zur Bildung einer Schicht in flüssiger Tröpfchenform mittels eines Sprühverfahrens auf der Innenseite des Außenbehälters (30) bzw. auf einer dort zuvoraufgebrachten Lage (37) aufgebracht,
vorzugsweise mit einem der folgenden zusätzlichen Merkmale:
b. nach Aufbringen der Schicht über ein Sprühverfahren wird die Schicht erwärmt, so dass hierdurch eine Homogenisierung der Schichtdicke und/oder eine Verfüllung von beim Sprühen verbliebenen Leerstellen bewirkt wird und/oder
c. die eingebrachten Tröpfchen umfasst ein Lösungsmittel, welches zum Zwecke der Verfestigung der Schicht bestimmungsgemäß nach Einbringung ausdünstet, insbesondere unter Wärmezufuhr.

7. Verfahren nach einem der vorstehenden Ansprüche mit dem folgenden Merkmal:
a. das Beutelmaterial (70), das Trennmaterial und/oder das Einfärbematerial wird zur Bildung einer Schicht in Pulverform auf der Innenseite des Außenbehälters (30) bzw. auf einer dort zuvor aufgebrachten Lage (37) aufgebracht,
vorzugsweise mit einem der folgenden zusätzlichen Merkmale:
b. das Beutelmaterial (70) in Pulverform wird im trockenen Zustand in den Außenbehälter eingebracht und schlägt sich dort an der Innenseite nieder, oder
c. das Beutelmaterial (70) in Pulverform wird im trockenen Zustand und elektrostatisch aufgeladen in den ßenbehälter eingebracht und schlägt sich dort an einer leitfähigen Innenseite des Außenbehälters nieder, oder
d. das Beutelmaterial in Pulverform wird als Teil einer Suspension mit einer Trägerflüssigkeit auf die Innenseite des Außenbehälters in versprühter oder nicht versprühter Form aufgebracht, von wo die Trägerflüssigkeit verdunstet und das Pulver zurücklässt, vorzugsweise weiterhin mit dem folgenden zusätzlichen Merkmal:
e. nach Aufbringen der Schicht (72) aus Pulver wird die Schicht erwärmt, so dass hierdurch ein Aufschmelzen des Pulvers und damit die Bildung einer durchgehenden Lage (46,47,48) bewirkt werden.

8. Verfahren nach einem der vorstehenden Ansprüche mit dem folgenden Merkmal:
a. das Beutelmaterial (50; 54; 70), das Trennmaterial und/oder das Einfärbematerial wird zur Bildung einer Schicht in flüssiger Form in den Außenbehälter eingebracht, und
b. nach Einbringungdes Beutelmaterials (50; 54; 70) wird durch Bewegen des Außenbehälters (30), insbesondere durch Rotation des Außenbehälters (30) um eine oder mehrere Rotationsachsen (A, B), eine Verteilung des flüssigen Materials zur Bildung einer umfänglichen und durchgehenden Schicht (52) bewirkt,

9. Verfahren nach einem der vorstehenden Ansprüche mit mindestens einem derfolgenden Merkmale:
a. zur Bildung des Innenbehälters (40) wird mindestens eine Lage (46, 47, 48) aus einem Kunststoff-lonomer erzeugt und/oder
b. zur Bildung des Innenbehälters (40) wird mindestens eine Lage (46,47,48) aus einem Ethylen-Vinylalkohol-Copolymer (EVOH) erzeugt und/oder
c. zur Bildung des Innenbehälters (40) wird mindestens eine Lage (46, 47, 48) aus Polyamid erzeugt und/oder
d. zur Bildung des Innenbehälters (40) wird mindestens eine Lage (46,47,48) aus Polyethylen erzeugt.

10. Verfahren nach einem der vorstehenden Ansprüche mit mindestens einem derfolgenden Merkmale:
a. es wird ein vorgefertigten Außenbehälter (30) verwendet, der zumindest eine Lage (36) aus PP aufweist und/oder
b. es wird ein vorgefertigten Außenbehälter (30) verwendet, der zumindest eine Lage (36) aus Glas aufweist und/oder
c. es wird ein vorgefertigten Außenbehälter (30) verwendet, der zumindest abschnittsweise eine Wandung aus einem gasdurchlässigen porösen Material aufweist.

11. Verfahren zur Herstellung eines Flüssigkeitsspenders (10) mit den folgenden Merkmalen:
a. am Behältersystem (20), hergestellt nach einem der vorstehenden Ansprüche 1 bis 10, wird ein Austragkopf (12) mit einer Betätigungshandhabe (16) und einer Pumpe (14) am Behältersystem (20) angebracht.

12. Behältersystem (20) zur Verwendung als Teil eines Flüssigkeitsspenders (10) mit den folgenden Merkmalen:
a. das Behältersystem (20) weist einen formstabilen Außenbehälter (30) und einen innerhalb des Außenbehälters (30) angeordneten kollabierbaren Innenbehälter (40) in Art eines Beutels auf,
**gekennzeichnet durch** das folgende Merkmal:
b. das Behältersystem (20) ist mit dem Verfahren nach einem der Ansprüche 1 bis 10 hergestellt worden.

13. Behältersystems (20) nach Anspruch 12 mit den folgenden Merkmalen:
a. der Außenbehälter (30) verfügt über eine Mantelwandung (38) und eine Bodenwandung (39) und
b. die Mantelwandung (38) weist eine von einer zylindrischen Form abweichende Formgebungauf.

14. Flüssigkeitsspender (10) mit den folgenden Merkmalen:
a. der Flüssigkeitsspender (10) weist ein Behältersystem (20) auf,
b. der Flüssigkeitsspender (10) weist einen Austragkopf (12) auf,
**gekennzeichnet durch** das folgende Merkmal:
c. das Behältersystem (20) ist gemäß einem der Ansprüche 12 und 13 ausgebildet.

## Claims

1. Method for producing a container system (20) for a liquid dispenser (10), having the following features:
a. the method serves for producing a container system (20) having a dimensionally stable outer container (30) and a collapsible inner container (40), in the form of a pouch, arranged within the outer container, and
b. starting from the prefabricated outer container (30), at least one ply (46) of a pouch material (50; 54; 70) is applied to an inner wall of the outer container (30), and
c. for this purpose, the pouch material (50; 54; 70) is applied in the form of a liquid or powder to the inner wall, where, after solidifying or fusing, it forms a ply (46, 47, 48) of a wall of the inner container (40), said ply (46, 47, 48) detaching from the inner wall of the outer container (30) as intended when the inner container (40) collapses
**characterized by** the following feature:
d. to form the inner container, plies (46, 47, 48) made of the following pouch materials are successively produced from outside to inside:
- at least plastic ionomer and polyethylene, in particular plastic ionomer, EVOH and polyethylene, and/or
- at least plastic ionomer and polyamide, in particular plastic ionomer, EVOH and polyamide, and/or
- at least plastic ionomer and LDPE, in particular plastic ionomer, EVOH, and LDPE.

2. Method according to Claim 1, having the following additional feature:
a. a plurality of plies (47, 48, 49) that jointly form the wall of the inner container (40) are successively created in that in each case one layer of a pouch material (50; 54; 70) is applied to the inner wall of the outer container (30) or to an already applied ply (47, 48, 49) of the inner container (40).

3. Method according to one of the preceding claims, having the following features:
a. before a first layer of the pouch material (50; 54; 70) is introduced, at least one layer of a coloring material is applied to the inner wall of the outer container (30), and
b. for this purpose, the coloring material is applied in the form of a liquid or powder to the inner wall, where, after solidifying or fusing, it forms a colored ply (37, 47) that either remains on the inner wall as intended or detaches from the inner wall of the outer container (30) as intended when the inner container (40) collapses, and forms an outer ply (47) of the inner container.

4. Method according to one of the preceding claims, having the following features:
a. before a first layer of the pouch material (50; 54; 70) and/or a layer of the coloring material is introduced, a layer of a release material is applied to an inner wall of the outer container, and
b. for this purpose, the release material is applied in the form of a liquid or powder to the inner wall, where it forms a release ply (26) that favors the detaching of the inner container (40) from the inner wall of the outer container (30) as intended.

5. Method according to Claim 4, having the following feature:
a. the release material is selected such that it forms a porous and/or air-permeable release ply (26), and
b. the outer container (30) has a ventilation hole (31), the end of which that is directed into the interior of the outer container (30) is covered by the porous release ply (26).

6. Method according to one of the preceding claims, having the following feature:
a. the pouch material (50; 54; 70), the release material and/or the coloring material, in order to form a layer, is applied in the form of liquid droplets by means of a spraying method to the inner side of the outer container (30), or to a ply (37) already applied there,
preferably having one of the following additional features:
b. after the layer has been applied via a spraying method, the layer is heated so as to cause homogenization of the layer thickness and/or filling of gaps that have remained during spraying, and/or
c. the introduced droplets comprise a solvent, which, for the purpose of solidifying the layer, evaporates as intended after being introduced, in particular with heating.

7. Method according to one of the preceding claims, having the following feature:
a. the pouch material (70), the release material and/or the coloring material, in order to form a layer, are/is applied in the form of a powder to the inner side of the outer container (30), or to a ply (37) already applied there,
preferably having one of the following additional features:
b. the pouch material (70) in the form of a powder is introduced in the dry state into the outer container and settles on the inner side there, or
c. the pouch material (70) in the form of a powder is introduced in the dry state and in an electrostatically charged manner into the outer container and settles there on a conductive inner side of the outer container, or
d. the pouch material in the form of a powder is applied as part of a suspension with a carrier fluid in a sprayed or nonsprayed form to the inner side of the outer container, from where the carrier fluid evaporates and leaves the powder behind,
preferably also having the following additional feature:
e. after the layer (72) of powder has been applied, the layer is heated so as to cause the powder to melt and thus to form a continuous ply (46, 47, 48).

8. Method according to one of the preceding claims, having the following feature:
a. the pouch material (50; 54; 70), the release material and/or the coloring material, in order to form a layer, is introduced in the form of a liquid into the outer container, and
b. after the pouch material (50; 54; 70) has been introduced, spreading of the liquid material is brought about to form an extensive and continuous layer (52) by the outer container (30) being moved, in particular by the outer container (30) being rotated about one or more axes of rotation (A, B).

9. Method according to one of the preceding claims, having at least one of the following features:
a. to form the inner container (40), at least one ply (46, 47, 48) made of a plastic ionomer is created, and/or
b. to form the inner container (40), at least one ply (46, 47, 48) made of an ethylene-vinyl alcohol copolymer (EVOH) is created, and/or
c. to form the inner container (40), at least one ply (46, 47, 48) made of polyamide is created, and/or
d. to form the inner container (40), at least one ply (46, 47, 48) made of polyethylene is created.

10. Method according to one of the preceding claims, having at least one of the following features:
a. a prefabricated outer container (30) that has at least one ply (36) made of PP is used, and/or
b. a prefabricated outer container (30) that has at least one ply (36) made of glass is used, and/or
c. a prefabricated outer container (30) that at least partially has a wall made of a gas-permeable porous material is used.

11. Method for producing a liquid dispenser (10), having the following features:
a. a discharging head (12) having an actuating handle (16) and a pump (14) is attached to the container system (20) produced according to one of the preceding Claims 1 to 10.

12. Container system (20) for use as part of a liquid dispenser (10), having the following features:
a. the container system (20) has a dimensionally stable outer container (30) and a collapsible inner container (40), in the form of a pouch, arranged within the outer container (30),
**characterized by** the following feature:
b. the container system (20) has been produced by the method according to one of claims 1 to 10.

13. Container system (20) according to Claim 12, having the following features:
a. the outer container (30) has a lateral wall (38) and a bottom wall (39), and
b. the lateral wall (38) has a shape other than a cylindrical shape.

14. Liquid dispenser (10) having the following features:
a. the liquid dispenser (10) has a container system (20),
b. the liquid dispenser (10) has a discharging head (12),
**characterized by** the following feature:
c. the container system (20) is configured as per either of Claims 12 and 13.

## Revendications

1. Procédé de fabrication d'un système de contenant (20) pour un distributeur de liquide (10) présentant les caractéristiques suivantes :
a. le procédé sert à fabriquer un système de contenant (20) comprenant un contenant extérieur (30) rigide et un contenant intérieur (40) pliable, disposé à l'intérieur du contenant extérieur et se présentant sous la forme d'une poche ;
b. à partir du contenant extérieur (30) fabriqué au préalable, au moins une couche (46) d'un matériau composant ladite poche (50; 54; 70) est appliquée sur une paroi intérieure du contenant extérieur (30) ;
c. à cet effet, le matériau composant ladite poche (50; 54; 70) est appliqué sous forme liquide ou pulvérulente sur ladite paroi où, après solidification ou fusion, il forme une couche (46, 47, 48) d'une paroi du contenant intérieur (40), ladite couche se détachant de la paroi intérieure du contenant extérieur (30) conformément au but recherché à l'occasion du repliement du contenant intérieur (40),
**caractérisé par** la caractéristique suivante :
d. pour constituer le contenant intérieur, des couches successives (46, 47, 48) sont fabriquées, en partant de l'extérieur vers l'intérieur, à partir des matériaux de composition de la poche suivants :
- au moins une matière plastique ionomère et un polyéthylène, en particulier une matière plastique ionomère, un EVOH et un polyéthylène,
- et/ou au moins une matière plastique ionomère et un polyamide, en particulier une matière plastique ionomère, un EVOH et un polyamide,
- et/ou au moins une matière plastique ionomère et un PEbd, en particulier une matière plastique ionomère, un EVOH et un PEbd.

2. Procédé selon la revendication 1, comprenant la caractéristique supplémentaire suivante :
a. plusieurs couches (47, 48, 49) formant conjointement la paroi du contenant intérieur (40) sont produites successivement par l'application d'une couche d'un matériau composant la poche (50; 54; 70) à chaque fois sur la paroi intérieure du contenant extérieur (30) ou sur une couche (47, 48, 49) du contenant intérieur (40) appliquée précédemment.

3. Procédé selon l'une quelconque des revendications précédentes, comprenant les caractéristiques suivantes :
a. avant l'introduction d'une première couche de matériau composant la poche (50; 54; 70), au moins une couche d'un matériau de coloration est appliquée sur la paroi intérieure du contenant extérieur (30) ;
b. et à cet effet, le matériau de coloration est appliqué sous forme liquide ou pulvérulente sur la paroi intérieure où, après solidification ou fusion, il forme une couche de coloration (37, 47) qui, soit reste sur la paroi intérieure conformément au but recherché, soit se détache de la paroi intérieure du contenant extérieur (30) conformément au but recherché à l'occasion du repliement du contenant intérieur (40) et forme une couche extérieure (47) du contenant intérieur.

4. Procédé selon l'une quelconque des revendications précédentes, comprenant les caractéristiques suivantes :
a. avant l'introduction d'une première couche de matériau composant la poche (50; 54; 70) et/ou d'une couche du matériau de coloration, une couche d'un matériau de séparation est appliquée sur une paroi intérieure du contenant extérieur ;
b. et à cet effet, le matériau de séparation est appliqué sous forme liquide ou pulvérulente sur la paroi intérieure où il forme une couche de séparation (26) qui, conformément au but recherché, facilite le détachement du contenant intérieur (40) de la paroi intérieure du contenant extérieur (30).

5. Procédé selon la revendication 4, comprenant la caractéristique suivante :
a. le matériau de séparation est choisi de manière à former une couche de séparation poreuse et/ou perméable à l'air ;
b. et le contenant extérieur (30) présente un trou traversant de ventilation (31) dont l'extrémité tournée vers l'espace intérieur du contenant extérieur (30) est recouverte par la couche de séparation poreuse (26).

6. Procédé selon l'une quelconque des revendications précédentes, comprenant la caractéristique suivante :
a. le matériau composant la poche (50; 54; 70), le matériau de séparation et/ou le matériau de coloration sont appliqués pour former une couche sur la face interne du contenant extérieur (30) ou sur une couche (37) appliquée précédemment, sous la forme de gouttelettes liquides au moyen d'un procédé de pulvérisation ;
et de préférence comprenant l'une des caractéristiques supplémentaires suivantes :
b. après son application par pulvérisation, la couche est chauffée de manière à provoquer une homogénéisation de son épaisseur et/ou un comblement des vides laissés lors de la pulvérisation ;
c. et/ou les gouttelettes appliquées renferment un solvant qui a pour but de durcir par évaporation ladite couche conformément au but recherché après son introduction, et en particulier sous apport de chaleur.

7. Procédé selon l'une quelconque des revendications précédentes, comprenant la caractéristique suivante :
a. le matériau composant la poche (70), le matériau de séparation et/ou le matériau de coloration sont appliqués pour former une couche sous forme pulvérulente sur la face interne du contenant extérieur (30) ou sur une couche (37) appliquée précédemment, et de préférence comprenant l'une des caractéristiques supplémentaires suivantes :
b. le matériau composant la poche (70) est introduit sous forme d'une poudre sèche dans le contenant extérieur et se dépose sur la face interne ;
c. ou bien le matériau composant la poche (70) est introduit sous forme d'une poudre sèche chargée d'électricité statique dans le contenant extérieur où il se dépose sur une face interne conductible du contenant extérieur ;
d. ou le matériau composant la poche sous forme de poudre en suspension dans un véhicule liquide est appliqué sous une forme pulvérisée ou non sur la face interne du contenant extérieur d'où ledit véhicule liquide s'évapore et laisse subsister ladite poudre ;
et de préférence en outre comprenant la caractéristique supplémentaire suivante :
e. après son application, la couche de poudre (72) est mise en fusion par échauffement afin de constituer une couche non lacunaire (46, 47, 48).

8. Procédé selon l'une quelconque des revendications précédentes, comprenant la caractéristique suivante :
a. le matériau composant la poche (50; 54; 70), le matériau de séparation et/ou le matériau de coloration sont introduits sous forme liquide dans le contenant extérieur pour former une couche ;
b. et en ce que, après l'introduction du matériau composant la poche (50; 54; 70), un mouvement du contenant extérieur (30), et en particulier une rotation du contenant extérieur (30) autour d'un ou de plusieurs axes de rotation (A, B), répartit le matériau liquide pour former une couche périphérique non lacunaire (52).

9. Procédé selon l'une quelconque des revendications précédentes, comprenant au moins l'une des caractéristiques suivantes :
a. au moins une couche (46, 47, 48) constituée d'une matière plastique ionomère est produite pour former le contenant intérieur (40) ;
b. et/ou au moins une couche (46, 47, 48) constituée d'un copolymère d'éthylène-alcool vinylique (EVOH) est produite pour former le contenant intérieur (40) ;
c. et/ou au moins une couche (46, 47, 48) constituée d'un polyamide est produite pour former le contenant intérieur (40) ;
d. et/ou au moins une couche (46, 47, 48) constituée d'un polyéthylène est produite pour former le contenant intérieur (40).

10. Procédé selon l'une quelconque des revendications précédentes, comprenant au moins l'une des caractéristiques suivantes :
a. on utilise un contenant extérieur (30) fabriqué au préalable qui comporte au moins une couche (36) en PP ; et/ou
b. on utilise un contenant extérieur (30) fabriqué au préalable qui comporte au moins une couche (36) en verre ; et/ou
c. on utilise un contenant extérieur (30) fabriqué au préalable qui comporte, au moins partiellement, une paroi constituée d'un matériau poreux et perméable aux gaz.

11. Procédé de fabrication d'un distributeur de liquide (10) comprenant les caractéristiques suivantes :
a. une tête de déversement (12) munie d'une manette de commande (16) et d'une pompe (14) est montée sur le système de contenant (20) fabriqué selon l'une quelconque des revendications précédentes 1 à 10.

12. Système de contenant (20) destiné à être utilisé comme partie d'un distributeur de liquide (10), comprenant les caractéristiques suivantes :
a. le système de contenant (20) comprend un contenant extérieur (30) rigide et un contenant intérieur (40) repliable, disposé à l'intérieur du contenant extérieur (30) et se présentant sous la forme d'une poche ;
**caractérisé par** la caractéristique suivante :
b. le système de contenant (20) a été fabriqué par le procédé selon l'une quelconque des revendications 1 à 10.

13. Système de contenant (20) selon la revendication 12, comprenant les caractéristiques suivantes :
a. le contenant extérieur (30) présente une paroi d'enveloppe (38) et une paroi de fond (39) ; et
b. la paroi d'enveloppe (38) présente une forme s'écartant d'une forme cylindrique.

14. Distributeur de liquide (10) comprenant les caractéristiques suivantes :
a. le distributeur de liquide (10) comporte un système de contenant (20) ;
b. le distributeur de liquide (10) comporte une tête de déversement (12) ;
**caractérisé par** la caractéristique suivante :
c. le système de contenant (20) est réalise selon l'une quelconque des revendications 12 et 13.
